# EUROPÄISCHE PATENTSCHRIFT

(11) **EP 2 351 656 B1**
(45) Veröffentlichungstag und Bekanntmachung des Hinweises auf die Patenterteilung: **29.05.2013**
(21) Anmeldenummer: 10015024.2
(22) Anmeldetag: 26.11.2010
(51) Int. Cl.: B60G 7/00, B60G 9/00

(54) **Nutzfahrzeug mit einer Anbindung eines Dreieckslenkers**
Commercial vehicle with a triangular control arm
Véhicule utilitaire doté d'une liaison de bras triangulaires

(30) Priorität: 12.01.2010 DE 102010004321
(43) Veröffentlichungstag der Anmeldung: 03.08.2011
(73) Patentinhaber: MAN Truck & Bus AG, 80995 München (DE)
(72) Erfinder: Vrecko, Alexander, 80997 München (DE); Eberle, Andreas, 80687 München (DE)

(56) Entgegenhaltungen:
- EP-A2- 0 806 310
- WO-A1-02/06067
- WO-A1-2005/116465
- WO-A1-2005/124169
- WO-A1-2006/019309
- US-A- 5 564 521

## Beschreibung

Die Erfindung betrifft ein Nutzfahrzeug mit einem U-förmigen Trägerprofil, dessen Ober einen Steg miteinander verbundene Arme am Achsträger des Nutzfahrzeugs angeordnet sind und an dem je ein Schenkel eines Dreieckslenkers befestigbar ist, wobei neben der kraftschlüssigen Befestigung eine zusätzliche formschlüssige Anbindung vorgesehen ist.

Aus der EP 0 806 310 B1 geht eine Radaufhängung hervor, bei der jeder der beiden Querlenker ein innenendiges Lagerauge und ein aussenendiges Lagerauge mit jeweils einer sich quer zur Lenkerlängsrichtung erstreckenden Durchgangsbohrung aufweist. Der Dreieckslenker ist mit dem in seinem Lagerauge eingebauten kugeligen Molekularlager über eine darin ausgebildete Konusbohrung auf einem kegligen Lagerzapfen sitzend an diesem befestigt. Der Lagerzapfen ist Bestandteil eines Doppelkegelbolzens, der mit seinem oberen kegligen Bolzenabschnitt in eine untenendig am Achsschenkelträger ausgebildete Konusbohrung eintaucht und in dieser form- und kraftschlüssig mit einer Schraube arretiert ist, die hier gleichzeitig auch zur Festlagerung des Lagers am kegligen Lagerzapfen dient.Darüber hinaus ist bekannt, eine Balkonplatte auf dem Achsträger anzuordnen und diese Mittels eines Passbotzens gegenüber dem Achsträger zu sichern. Der Passbolzen ist dabei in der Mitte der Lenkerarmangriffspunkte an der Balkonplatte vorgesehen.

Ferner ist aus der WO 2006/019309 A1 ein Lager bekannt, das zur Anbindung einer V-förmigen Schiebestange an eine Radachse dient. Das Lager weist dabei einen inneren Körper auf, in dem ein kugelförmiges Ball-Element vorgesehen ist.

Nachteilig bei dieser Lösung ist ein relativ hoher Aufbau im Bereichs des Fahrgestells.

Es ist daher die Aufgabe der Erfindung eine Anbindung eines Dreieckslenkers am Achsträger zu schaffen, die eine niedrige Bauhöhe gewährleistet und bei der die Verbindung am Achsträger eine hohe Wartungsfreundlichkeit aufweist

Die Aufgabe wird erfindungsgemäß durch ein Nutzfahrzeug gelöst, bei dem lediglich der eine Arm des U-förmigen Trägerprofils eine kraftschlüssige und eine formschlüssige Anbindung am Achskörper aufweist, der andere Arm des U-förmigen Trägerprofils ist dagegen ausschließlich kraftschlüssig befestigt.

Erfindungsgemäß ist eine Kombination aus Kraftschluss und Formschluss zwischen dem Achsträger und dem u-förmigen Trägerprofil nur an einem Arm des U-förmigen Trägerprofils vorgesehen, während der andere Arm des U-förmigen Trägerprofils ausschließlich kraftschlüssig befestigt ist. Der Achsträger weist eine Konsole auf, die dem Arm des U-förmigen Trägerprofils im verbauten Zustand als Auflage dient und in die z.B. eine Schraube zur gegenseitigen kraftschlüssigen Verbindung eingreift. Zur formschlüssigen Verbindung zwischen U-förmigem Trägerprofil und Achsträger nimmt die Konsole z.B. einen Passbolzen auf. Der Einfachheit halber ist in der Folge aber nur von der Verbindung zwischen dem U-förmigen Trägerprofil und dem Achsträger die Rede. An dem Arm des U-förmigen Trägerprofils , der lediglich kraftschlüssig am Achsträger befestigt ist, erfolgt die Kraftübertragung zum Beispiel über den Reibschluss einer Schraube mit Hilfe der Vorspannung. Vorteilhaft ist, dass eine Passung für eine formschlüssige Anbindung nur an einem Arm des U-förmigen Trägerprofils benötigt wird, was zu einer einfacheren Montage führt. Im Gegensatz dazu kann derjenige Arm des U-förmigen Trägerprofils, der kraft- und formschlüssig am Achsträger befestigt ist, gegenüber dem reinen Kraftschluss das doppelte oder mehr Kraft übertragen. Die Schenkel der Dreieckslenker können dabei an je einem Arm des u-förmigen Trägerprofils oder aber an dem Steg angeordnet sein, der die beiden Arme des Trägerprofils miteinander verbindet.

In einer anderen Ausführungsform der Erfindung besteht die formschlüssige Anbindung aus einem, den Achsträger und den Arm des u-förmigen Trägerprofils durchsetzenden Bolzen. Vorstellbar ist dabei, dass der Passbolzen zum Beispiel ein Herzbolzen ist. Es ist jedoch auch jede andere Form eines Passbolzens denkbar.

In einer zusätzlichen Ausführungsform der Erfindung besteht die formschlüssige Befestigung aus mehreren, den Achsträger und den Arm des U-förmigen Trägerprofils durchsetzenden Bolzen.

Eine andere Ausführungsform der Erfindung sieht vor, dass die Schenkel des Dreieckslenkers mit dem Fahrgestellrahmen verbunden sind. Die Erfindung kann in Fahrzeugen mit einer oder zwei Hinterachsen eingesetzt werden. Es kann sich hierbei um eine Kombination aus zwei angetriebenen Achsen handeln. Denkbar ist jedoch auch, eine angetriebene mit einer nicht angetriebenen Hinterachse zu kombinieren.

Eine weitere Ausführungsform der Erfindung sieht vor, dass das u-förmige Trägerprofil symmetrisch oder asymmetrisch am Achsträger angeordnet ist. Das u-förmige Trägerprofil greift mit seinen Armen am Achsträger des Nutzfahrzeug an, wobei die Arme des Trägerprofils in Fahrtrichtung gesehen, zu beiden Seiten am Differenzialgehäuse anliegen. Das Differenzialgehäuse kann dabei mittig am Achsträger angeordnet sein oder aber aus der Mitte des Achsträgers heraus nach Außen verschoben sein. Das Hebelarmverhältnis der Arme des u-förmigen Trägerprofils gegenüber dem Achsträger wird dadurch begünstigt.

Eine weitere Ausführungsform der Erfindung sieht vor, dass der Kraftschluss zwischen dem Achsträger und dem Arm bzw. dem Steg des u-förmigen Trägerprofils durch Verwendung von Einlegefolien steigerbar ist. Die Kraftübertragung durch Kraftschluss wird durch eine Steigerung des Reibwertes zwischen den zu verschraubenden Teilen begünstigt. Hierzu kann zwischen den Achsträger und das u-förmige Trägerprofil eine Folie oder eine Beschichtung eingebracht werden, die den Reibwert zwischen Trägerprofil und Achsträger erhöht.

Eine andere Ausführungsform der Erfindung sieht vor, dass der Kraftschluss zwischen dem Achsträger und dem Arm oder dem Steg des U-förmigen Trägerprofils durch Verkleben steigerbar ist. Hierbei ist auf die miteinander zu verbindenden Flächen des U-förmigen Trägerprofils und des Achsträgers eine Klebstoffschicht aufbringbar. Das Verkleben des u-förmigen Trägerprofils mit dem Achsträger ermöglicht eine Erhöhung der Kraftübertragung und der Dauerfestigkeit.

Weitere Merkmale, Einzelheiten und Vorteile der Erfindung ergeben sich aus der folgenden Beschreibung verschiedener Ausführungsformen der Erfindung sowie anhand der Zeichnung. Hierbei zeigen:
Fig. 1 die Anordnung von Dreieckslenkerschenkein am Achsträger nach dem Stand der Technik,
Fig. 2 die Anordnung eines u-förmigen Trägerprofils am Achsträger mit zwei Dreieckslenkerschenkeln,
Fig. 3 die Anordnung eines u-förmigen Trägerprofils am Achsträger mit zwei Dreieckslenkerschenkeln wie nach Fig. 2 mit geänderten Haltekräften,
Fig. 4 eine Anordnung entsprechend Fig. 2, mit der kraftschlüssigen Befestigung der Arme des u-förmigen Trägerprofils und mit der erfindungsgemäßen einseitigen formschlüssigen Anbindung,
Fig. 5 ein u-förmiges Trägerprofil entsprechend der Fig. 4,
Fig. 6 ein u-förmiges Trägerprofil mit einer kraftschlüssigen Befestigungen und

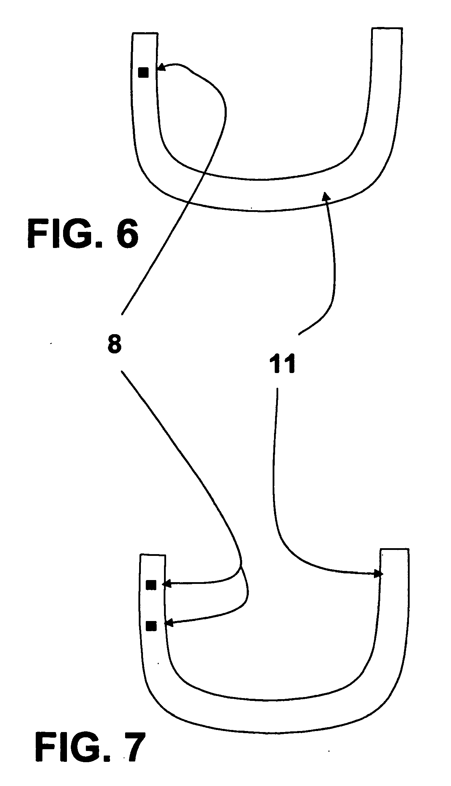

Fig. 6 ein u-förmiges Trägerprofil mit zwei kraftschlüssigen Befestigungen.

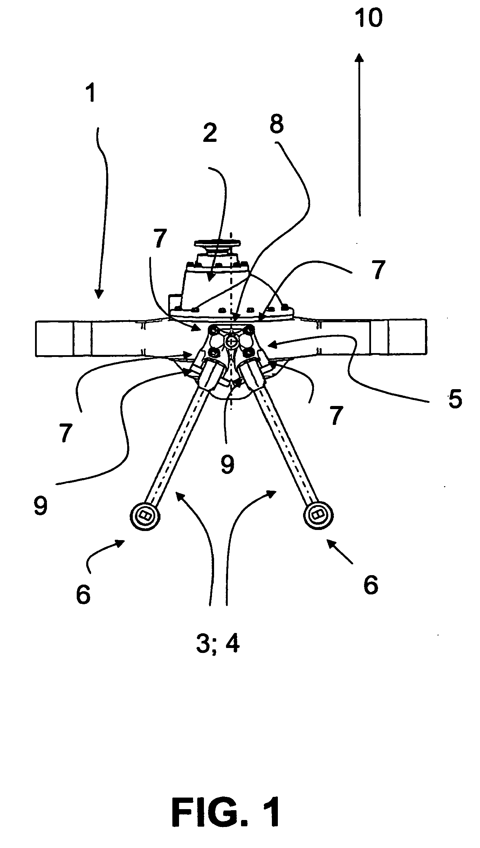

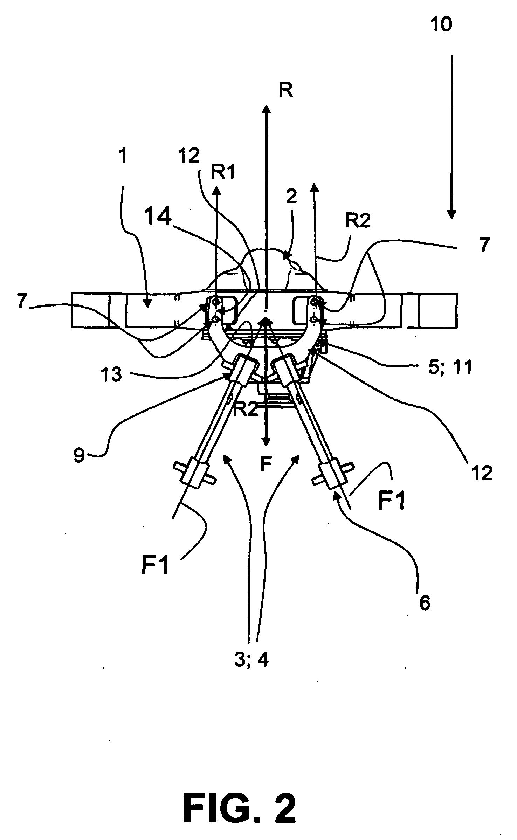

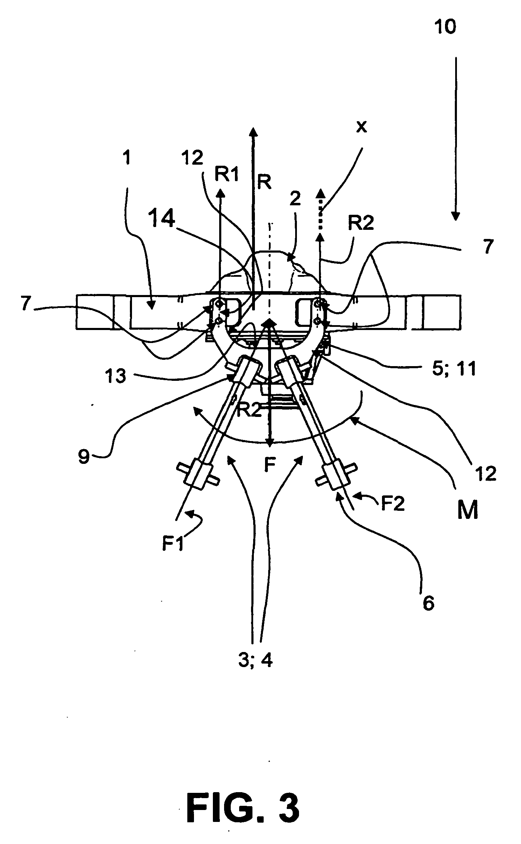

Fig. 1 bis 5 zeigen jeweils einen Achsträger 1 mit einem mittig angeordneten Differenzialgehäuse 2 und je zwei Schenkeln 3 eines Dreieckslenkers 4. In jeder Fig. 1 bis 3 ist ein Trägerprofil 5 dargestellt. Die Schenkel 3 der Dreieckslenker 4 weisen in Fig. 1 entgegen der Fahrtrichtung 10 und in den Fig. 2 und 3 in Fahrtrichtung 10 und sind an ihren rückwärtigen Enden 6 an dem Fahrgestell (nicht dargestellt) angelenkt. An den Bezugsziffern 7 ist das Trägerprofil 5 jeweils kraftschlüssig am Achsträger 1 befestigt. Die Bezugsziffer 8 zeigt die formschlüssige Verbindung des Trägerprofils 5 gegenüber dem Achsträger 1. Die Schenkel 3 des Dreieckslenkers 4 sind an den Bezugsziffern 9 am u-förmigen Trägerprofil 5 angelenkt.

In Fig. 2 ist das Trägerprofil 5 als u-förmiges Trägerprofil 11 ausgebildet. Das u-förmige Trägerprofil 11 weist zwei Arme 12 und einen, die beiden Arme 12 verbindenden Steg 13 auf. Das u-förmige Trägerprofil 11 ist an den Bezugsziffern 7 kraftschlüssig am Achsträger 1 befestigt.

Im Folgenden werden die Figuren 2 und 3 mittels eines Zahlenbeispiels weiter beschrieben. Es ist darauf hinzuweisen, dass die verwendeten Zahlenwerte rein beispielhaft gewählt sind und keinen ausschließlichen Charakter haben. In Fig. 2 ist die resultierende Lenkerkraft mit F bezeichnet und nimmt beispielhaft einen Wert von 1000 N an.

F = 1000 N

Die resultierende Lenkerkraft F wird durch die Haltekräfte R1 und R2 gehalten. Wenn die in Fig. 2 mit Bezugsziffern 7 bezeichneten Haltekräfte in Fahrtrichtung 10 gesehen zumindest auf einer Seite überschritten sind, versagt die Verbindung auf der entsprechenden Seite und die Verbindung beginnt zu rutschen.

### Beispiel:

Bei einer resultierenden Lenkerkraft F = 1000 N und entsprechenden Haltekräften R1 = 500 N und R2 = 500 N hält die kraftschlüssige Verbindung in der Fig. 2 an den Bezugsziffern 7. Die Arme 12 des u-förmigen Trägerprofils 11 sind somit an den Bezugsziffern 7 kraftschlüssig mit dem Achsträger 1 verbunden. Die kraftschlüssige Verbindung 7 des u-förmigen Trägerprofils 5 gegenüber dem Achsträger 1 hält in Bezug zur Fahrtrichtung 10, ohne an zumindest einer Seite an den Befestigungspunkten 7 zu rutschen. Die Belastung des u-förmigen Trägerprofils 11 an dem Achsträger 1 erfolgt symmetrisch. Die Resultierende aus R1 und R2 ist jeweils mit F1 bzw. F2 bezeichnet und liegt auf der Wirklinie von F.

F = 1000 N

R1 = 500 N, R2 = 500 N

R1 + R2 = 1000 N = F

Aufgrund von Fertigungstolleranzen, die z.B. durch die kraftschlüssige Verschraubung bei der Befestigung des u-förmigen Trägerprofils 11 am Achsträger 1 entstehen, kommt es in Fahrtrichtung 10 gesehen auf beiden Seiten an den Befestigungspunkten 7 zu unterschiedlichen Reibungskoeffizienten. Die Reibschlussverbindungen R1 und R2 erreichen dabei unterschiedliche Haltekräfte. Daraus folgt, dass die kraftschlüssige Verbindung der Arme 12 des u-förmigen Trägerprofils 11 am Achsträger 1 in Fahrtrichtung 10 gesehen zu rutschen beginnt.

Fig. 3, zweites Beispiel:
F = 1000 N
R1 = 600 N , R2 = 400 N
R1 +R2=1000N=F

In diesem Beispiel ist die Haltekraft R2 geringer als die Haltekraft R1. Infolge dessen liegt die Resultierende R aus R1 und R2 nicht auf der Wirklinie von F. Es entsteht ein Moment M aus R multipliziert mit dem Versatz der beiden Wirklinien von R und F.

M = R mal (Versatz der Wirklinien von R und F).

Das Moment M bewirkt ein Drehen des u-förmigen Trägerprofils 1 in Richtung des Pfeils M (M = Drehmoment des u-förmigen Trägerprofils 1). Zur Kompensation des Drehmoments M des u-förmigen Trägerprofils 1 wäre die Haltekraft R2 um X zu vergrößern.

R = R1 + R2, wobei R2 = 400 N + X

Ein Gleichgewicht zwischen den Haltekräften der Reibschlussverbindungen R1 und R2 kann durch eine Annäherung der beiden Wirklinien R und F hergestellt werden. In Fig. 3 ist die kraftschlüssige Verbindung in den Bezugsziffern 7 der Arme 12 des u-förmigen Trägerprofils 11 mit dem Achsträger 1 mit 1000 N an der maximalen Grenze der Haltekraft angelangt. Bei R2 wäre eine Haltekraft von 400 N + X nötig, um eine rutschsichere Verbindung zwischen den Armen 12 des u-förmigen Trägerprofils 11 an dem Achsträger 1 zu gewährleisten. Da die Haltekraft der Reibschlussverbindung R2 jedoch niedriger ist und die Verbindung zwischen R1 und R2 eine gewisse Elastizität aufweist, beginnt die kraftschlüssige Verbindung bei den Bezugsziffern 7, in Fahrtrichtung 10 gesehen auf der linken Seite, zu rutschen. Ein Rutschen der kraftschlüssigen Verbindung 7 bewirkt ein weiteres Absinken der Haltekraft der Reibschlussverbindung R2 unter den Wert von 400 N, da der Gleitreibungskoeffizient kleiner ist als der der Hafttreibung.

R1 + R2 < 1000 N = F

Hieraus folgt, dass die kraftschlüssige Verbindung 7 bei der Haltekraft R1 der Reibschlussverbindung zu rutschen beginnt, was zum kompletten Versagen der kraftschlüssigen Verbindungen 7 der Haltekraft der Reibschlussverbindungen R1 und R2 führt.

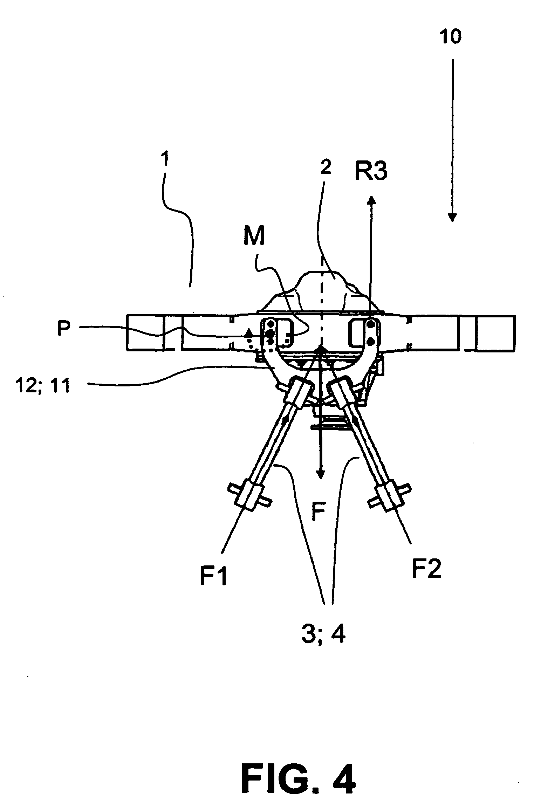

In Fig. 4 ist in Fahrtrichtung 10 gesehen am rechten Arm 12 des u-förmigen Trägerprofils 11 eine zusätzliche formschlüssige Befestigung P vorgesehen, die das u-förmige Trägerprofil 11 am Achsträger 1 fixiert. Im Weiteren wird angenommen, dass die formschlüssige Verbindung P ein Passbolzen ist.

Wenn:
F = 1000 N und
R3 = 500 N und P = 500 N

Resultiert daraus, dass R3 + P = 1000 N = F

Die Haltekraft R3 der Reibschlussverbindung und die Haltekraft P der formschlüssigen Verbindung sind im Gleichgewicht, so das der Schnittpunkt der jeweiligen Lenkerkräfte F1 und F2 der Schenkel 3 des Dreieckslenkers 4 auf der resultierenden F liegt.

In einem weiteren Beispiel ist:
F = 1000 N
R2 = 400 N und P = 600 N somit ist R3 + P = 1000 N = F.

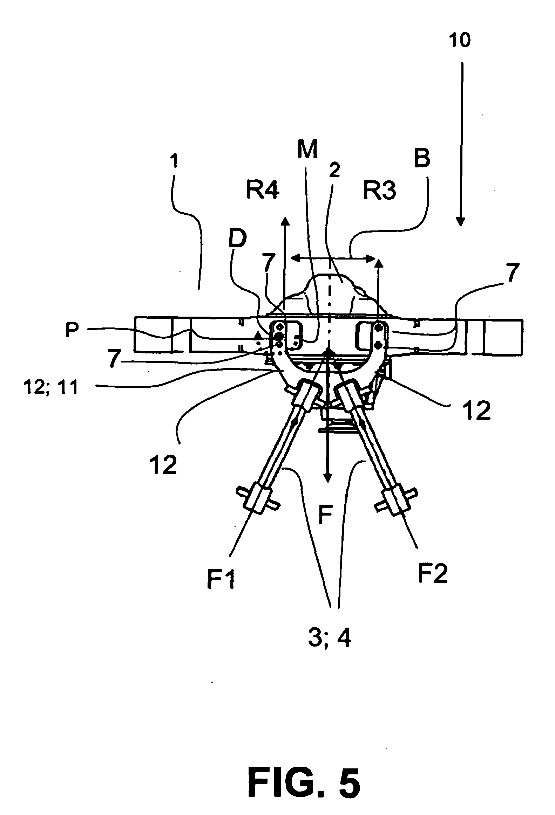

In Fig. 5 ist entsprechend der Fig. 2 ein Drehmoment M gegeben, da die Haltekraft der kraftschlüssigen Verbindung R3 geringer ist als 500 N. Der Drehpunkt D des u-förmigen Trägerprofils 11 verläuft senkrecht durch die formschlüssige Verbindung P des Passbolzens. Ist nun die Haltekraft R3 der Reibschlussverbindung schwächer als die Haltekraft R4 der Reibschlussverbindung, liegt das Drehmoment M im Punkt P. D. h. das u-förmige Trägerprofil 11 versucht sich um den im Wesentlichen senkrecht zum Achsträger 1 verlaufenden Passbolzen P zu drehen. Im Gegensatz zur vorhergehenden Fig. 2 nimmt der Passbolzen P wegen seiner Übergangspassung oder Presspassung Scherkräfte auf und nicht die kraftschlüssige Verbindung 7 im Punkt R1 bzw. R4. Das Drehmoment M kann durch Einbringung einer weiteren kraftschlüssigen Verbindung des Arms 12 des u-förmigen Trägerprofils 11 gegenüber dem Achsträger 1 kompensiert werden. In der Fig. 3 addieren sich die Haltekräfte R4 und R3 bezogen auf den Passbolzen. Während die Haltekraft R1 der Reibschlussverbindung in Fig. 2 bereits an der Haftgrenze ist und die Verringerung x der Haltekraft R2 der Reibschlussverbindung nicht ausgleichen kann, dient die Haltekraft R4 der Reibschlussverbindung in der Fig. 5 als zusätzliche Sicherheit. Die erfindungsgemäße Anordnung einer formschlüssigen Anbindung wie z. B. eines Passbolzens P an einem der beiden Arme 12 des u-förmigen Trägerprofils 11 bietet ein zusätzliches Mehr an Verrutschsicherheit und erleichtert die Montage. Verringert sich die Haltekraft R3 der Reibschlussverbindung gegenüber der Haltekraft R4, so setzt an der Haltekraft R4 der Reibschlussverbindung ein Hebel mit der Größe B an.

Den vorstehenden Beispielen liegt die Annahme zugrunde, dass die Haltekräfte R1 und R2 mindestens jeweils eine Haltekraft von 500 N aufbringen können, damit ein funktionsfähiger Halt des u-förmigen Trägerprofils 11 am Achsträger 1 gewährleistet ist. Wenn die Haltekraft R1, R2, R3, R4 einer Reibschlussverbindung nicht mehr ausreichend ist, kommt es zu einer Rutschbewegung mit dem Moment M. Hierbei ist denkbar, dass die nicht rutschende Haltekraft R1, R4 kein ideales momentenfreies Lager darstellt. An den Haltekräften R1 und R4 der Reibschlussverbindung können in gleicher Weise Drehmomente übertragen werden.

Die schematisch dargestellten Fig. 6 und 7 zeigen ein u-förmiges Trägerprofil 11 mit einem bzw. zwei formschlüssigen Verbindungen 8.

## Patentansprüche

1. Nutzfahrzeug, mit einem U-förmigen Trägerprofil (5), dessen über einen Steg (13) mit einander verbundene Arme (12) am Achsträger (1) des Nutzfahrzeugs befestigt sind und an dem je ein, am Fahrgestell angelenkter Schenkel (3) eines Dreieckslenkers (4) angeordnet ist, wobei neben der kraftschlüssigen Befestigung des Trägerprofils (5) am Achsträger (1) wenigstens eine zusätzliche formschlüssige Befestigung vorgesehen ist, wobei lediglich der eine Arm (12) des U-förmigen Trägerprofils (5) eine kraftschlüssige und eine formschlüssige Befestigung an den Achsträger (1) aufweist, während der andere Arm (12) des U-förmigen Trägerprofils (5) ausschließlich kraftschlüssig befestigt ist.

2. Nutzfahrzeug nach Anspruch 1, **dadurch gekennzeichnet, dass** die formschlüssige Befestigung aus einem, den Achsträger (1) und den Arm (12) des U-förmigen Trägerprofils (5) durchsetzenden Bolzen besteht.

3. Nutzfahrzeug nach Anspruch 1, **dadurch gekennzeichnet, dass** die formschlüssige Befestigung aus mehreren, den Achsträger (1) und den Arm (12) des U-förmigen Trägerprofils (5) durchsetzenden Bolzen besteht.

4. Nutzfahrzeug nach Anspruch 1, **dadurch gekennzeichnet, dass** die Schenkel (3) des Dreieckslenkers (4) mit dem Fahrgestellrahmen verbunden sind.

5. Nutzfahrzeug nach Anspruch 1, **dadurch gekennzeichnet, dass** das U-förmige Trägerprofil (5) symmetrisch am Achsträger (1) angeordnet ist.

6. Nutzfahrzeug nach Anspruch 1, **dadurch gekennzeichnet, dass** das U-förmige Trägerprofil (5) asymmetrisch am Achsträger (1) angeordnet ist.

7. Nutzfahrzeug nach Anspruch 1, **dadurch gekennzeichnet, dass** der Kraftschluss zwischen dem Achsträger (1) und dem Arm (12) des U-förmigen Trägerprofils (5) durch Verwendung von Einlegefolien steigerbar ist.

8. Nutzfahrzeug nach Anspruch 1, **dadurch gekennzeichnet, dass** der Kraftschluss zwischen dem Achsträger (1) und dem Arm (12) des U-förmigen Trägerprofils (5) durch Verklebung steigerbar ist.

## Claims

1. Utility vehicle having a U-shaped support profile (5) whose arms (12), which are connected to one another by means of a web (13), are fastened to the axle support (1) of the utility vehicle, on which U-shaped support profile is arranged in each case one limb (3), which is articulatedly connected to the chassis, of a triangular control arm (4), wherein in addition to the non-positively locking fastening of the support profile (5) to the axle support (1), at least one additional positively locking fastening is provided, wherein only one arm (12) of the U-shaped support profile (5) has a non-positively locking and a positively locking fastening to the axle support (1), whereas the other arm (12) of the U-shaped support profile (5) is fastened in an exclusively non-positively locking manner.

2. Utility vehicle according to Claim 1, **characterized in that** the positively locking fastening is composed of a bolt which extends through the axle support (1) and through the arm (12) of the U-shaped support profile (5).

3. Utility vehicle according to Claim 1, **characterized in that** the positively locking fastening is composed of a plurality of bolts which extend through the axle support (1) and through the arm (12) of the U-shaped support profile (5).

4. Utility vehicle according to Claim 1, **characterized in that** the limbs (3) of the triangular control arm (4) are connected to the chassis frame.

5. Utility vehicle according to Claim 1, **characterized in that** the U-shaped support profile (5) is arranged symmetrically on the axle support (1).

6. Utility vehicle according to Claim 1, **characterized in that** the U-shaped support profile (5) is arranged asymmetrically on the axle support (1).

7. Utility vehicle according to Claim 1, **characterized in that** the non-positive locking between the axle support (1) and the arm (12) of the U-shaped support profile (5) can be intensified through the use of inlay foils.

8. Utility vehicle according to Claim 1, **characterized in that** the non-positive locking between the axle support (1) and the arm (12) of the U-shaped support profile (5) can be intensified through adhesive bonding.

## Revendications

1. Véhicule utilitaire comprenant un profilé de support en forme de U (5) dont les bras (12) reliés l'un à l'autre par le biais d'un élément jointif (13) sont fixés au support d'essieu (1) du véhicule utilitaire et sur lequel est disposée une branche (3) respective, articulée sur le châssis, d'un bras triangulaire (4) et, outre la fixation par engagement par force du profilé de support (5) au support d'essieu (1), au moins une fixation par engagement par complémentarité de formes supplémentaire étant prévue, seulement l'un des bras (12) du profilé de support en forme de U (5) présentant une fixation par engagement par force et une fixation par engagement par complémentarité de formes au support d'essieu (1), tandis que l'autre bras (12) du profilé de support en forme de U (5) est exclusivement fixé par engagement par force.

2. Véhicule utilitaire selon la revendication 1, **caractérisé en ce que** la fixation par engagement par complémentarité de formes est constituée d'un boulon traversant le support d'essieu (1) et le bras (12) du profilé de support en forme de U (5).

3. Véhicule utilitaire selon la revendication 1, **caractérisé en ce que** la fixation par engagement par complémentarité de formes est constituée de plusieurs boulons traversant le support d'essieu (1) et le bras (12) du profilé de support en forme de U (5).

4. Véhicule utilitaire selon la revendication 1, **caractérisé en ce que** les branches (3) du bras triangulaire (4) sont reliées au cadre de châssis.

5. Véhicule utilitaire selon la revendication 1, **caractérisé en ce que** le profilé de support en forme de U (5) est disposé de manière symétrique sur le support d'essieu (1).

6. Véhicule utilitaire selon la revendication 1, **caractérisé en ce que** le profilé de support en forme de U (5) est disposé de manière asymétrique sur le support d'essieu (1).

7. Véhicule utilitaire selon la revendication 1, **caractérisé en ce que** l'engagement par force entre le support d'essieu (1) et le bras (12) du profilé de support en forme de U (5) peut être augmenté par l'utilisation de feuilles d'insertion.

8. Véhicule utilitaire selon la revendication 1, **caractérisé en ce que** l'engagement par force entre le support d'essieu (1) et le bras (12) du profilé de support en forme de U (5) peut être augmenté par collage.
